# FASCICULE DE BREVET EUROPEEN

(11) **EP 2 643 728 B1**
(45) Date de publication et mention de la délivrance du brevet: **18.03.2015**
(21) Numéro de dépôt: 11799763.5
(22) Date de dépôt: 21.11.2011
(51) Int. Cl.: G02B 21/06, G02B 26/06, G02B 27/00

(54) **PROCEDE ET SYSTEME DE CALIBRATION D'UN MODULATEUR OPTIQUE SPATIAL DANS UN MICROSCOPE OPTIQUE**
VERFAHREN UND SYSTEM ZUR KALIBRIERUNG EINES RÄUMLICHEN OPTISCHEN MODULATORS BEI EINEM OPTISCHEN MIKROSKOP
METHOD AND SYSTEM FOR CALIBRATING A SPATIAL OPTICAL MODULATOR IN AN OPTICAL MICROSCOPE

(30) Priorité: 22.11.2010 FR 1059590
(43) Date de publication de la demande: 02.10.2013
(73) Titulaire: Ecole Polytechnique, 91120 Palaiseau (FR)
(72) Inventeur: DEBARRE, Delphine, F-75014 Paris (FR); VIEILLE, Thibault, F-78590 Noisy-le-Roy (FR); BEAUREPAIRE, Emmanuel, F-91120 Palaiseau (FR); MARTIN, Jean-Louis, F-91440 Bures sur Yvette (FR)
(74) Mandataire: Coralis Harle
(86) Numéro de dépôt international: PCT/FR2011/052717
(87) Numéro de publication internationale: WO 2012/069749

(56) Documents cités:
- TURAGA D ET AL: "Image-based calibration of a deformable mirror in wide-field microscopy", APPLIED OPTICS, OPTICAL SOCIETY OF AMERICA, vol. 49, no. 11, 10 avril 2010 (2010-04-10), pages 2030-2040, XP001553297, ISSN: 0003-6935 cité dans la demande
- TOBIAS HAIST ET AL: "Scene-based wavefront correction with spatial light modulators", PROCEEDINGS OF SPIE, vol. 7064, 11 août 2008 (2008-08-11), pages 70640M-1-70640M-11, XP055000402, ISSN: 0277-786X, DOI: 10.1117/12.794860
- MATS G. LÖFDAHL ET AL: "Calibration of a Deformable Mirror and Strehl Ratio Measurements by Use of Phase Diversity", APPLIED OPTICS, vol. 39, no. 1, 1 janvier 2000 (2000-01-01), pages 94-103, XP055000364, ISSN: 0003-6935, DOI: 10.1364/AO.39.000094 cité dans la demande
- DÉBARRE D ET AL: "Image-based adaptive optics for two.photon microscopy", OPTICS LETTERS, vol. 34, no. 16, 15 août 2009 (2009-08-15) , pages 2495-2497, XP001547260, OSA, WASHINGTON, DC, US ISSN: 0146-9592, DOI: 10.1364/OL.34.002495 cité dans la demande

## Description

### Domaine technique

La présente invention concerne un procédé et un système de calibration d'un dispositif optique à modulateur optique spatial. Plus précisément, l'invention concerne un procédé et un dispositif pour calibrer l'influence d'un modulateur optique spatial placé dans ou en amont d'un microscope optique, sur la qualité des images obtenues dans ce microscope.

### État de la technique

Le développement de nouvelles techniques d'imagerie en microscopie optique (microscopie confocale, par illumination structurée, microscopie de fluorescence à balayage, à déplétion par émission stimulée (STED), techniques d'optique non linéaire, *etc*) et de nouvelles applications en imagerie biologique ou biomédicale, nécessite des microscopes optiques produisant des images d'excellente qualité. La microscopie d'objets plans ou situés dans l'air donne généralement des images de très haute résolution. Néanmoins, la microscopie optique d'échantillons biologiques épais rencontre des problèmes d'aberrations optiques qui limitent la résolution spatiale des images. Ces aberrations optiques peuvent provenir de l'objectif du microscope, d'une désadaptation d'indice entre l'objectif, le milieu d'immersion et l'échantillon ou encore de la nature de l'échantillon lui-même qui peut présenter des variations internes locales d'indice de réfraction.

L'utilisation de modulateurs optiques spatiaux dans un microscope a déjà été proposée pour moduler spatialement un faisceau optique en amplitude et/ou en phase ou pour corriger des aberrations optiques. De manière générale, un modulateur optique spatial est un dispositif permettant de moduler le profil spatial du champ incident en amplitude et/ou en phase. Parmi les modulateurs optiques spatiaux on trouve notamment des miroirs déformables munis d'actionneurs ainsi que des modulateurs spatiaux de lumière (SLM ou Spatial Light Modulator) à cristaux liquides. Dans la suite du présent document, on entend par modulateur optique spatial un composant optique comprenant une pluralité d'éléments reliés à des moyens de commande pour moduler l'amplitude et/ou la phase d'un faisceau lumineux. Les différentes technologies de modulation optique spatiale permettent de fonctionner en réflexion ou en transmission avec des performances variables en terme de résolution spatiale, temps de réponse et réponse en longueur d'onde. Par exemple, un modulateur spatial à cristaux liquides permet de moduler un faisceau avec une très bonne résolution spatiale, chaque pixel pouvant être commandé individuellement.

L'utilisation d'un miroir dont la surface peut être déformée par des actionneurs trouve des applications en optique active pour améliorer la qualité des images produites par des instruments optiques et en optique adaptative pour moduler un front d'onde à une fréquence temporelle élevée. L'optique adaptative est notamment mise en oeuvre dans les grands télescopes destinés à l'observation en astronomie pour corriger en temps réel les déformations de l'image induites par les turbulences atmosphériques. En imagerie microscopique, les aberrations optiques peuvent varier d'un échantillon à un autre, mais dans la plupart des applications, la variation des aberrations dans une image est relativement lente en fonction du temps. Toutefois, dans certaines applications de microscopie, il peut aussi être nécessaire d'optimiser très rapidement la qualité de l'image détectée. L'optique adaptative a donc été proposée comme une solution pour compenser les aberrations optiques dans un microscope et améliorer les limites de résolution en imagerie microscopique, en particulier dans des applications de biologie.

Dans un microscope à optique adaptative, un miroir déformable est généralement utilisé pour induire une modulation du front d'onde du faisceau lumineux excitateur et éventuellement aussi une modulation du signal collecté à travers l'objectif de microscope. Cette modulation se traduit par une variation du profil d'amplitude et de phase à l'entrée de l'objectif du microscope, induisant elle-même une variation de la réponse impulsionnelle excitatrice (Point Spread Function ou PSF) du microscope. La PSF représente la réponse d'un système optique à un point source et décrit comment chaque point d'un objet est modifié par le système optique pour former l'image résultante observée en intensité.

Selon le type d'échantillon observé en microscopie, on souhaite pouvoir appliquer des déformations précises pour compenser par exemple de l'astigmatisme ou encore une défocalisation du faisceau. Ainsi, la publication D. Débarre et al. « Image-based adaptative optics for two-photon microscopy », Optics Letters, Vol. 34, N° 16, p. 2495-2497 décrit l'amélioration d'images de microscopie par l'utilisation d'un miroir déformable commandé par des fonctions prédéfinies de type combinaisons de modes de Zernike.

Dans le cas d'un modulateur spatial à cristaux liquides, la commande de chaque pixel produit une modulation de phase a priori connue pixel par pixel. Toutefois le positionnement exact du SLM par rapport au faisceau est généralement inconnu. Or, l'influence exacte d'un modulateur optique spatial en amplitude et/ou en phase sur un faisceau optique dépend à la fois de la position et de la taille du faisceau optique par rapport au modulateur optique spatial. Cette influence n'est généralement pas connue d'avance, que ce soit dans le plan focal d'un dispositif optique, c'est-à-dire là où le faisceau optique est focalisé, ou bien dans le plan de la pupille, où le faisceau optique est étendu.

Certes, il existe des procédés pour calibrer par exemple un miroir déformable dans un télescope ou dans un microscope.

Un premier groupe de techniques de calibration est basé sur l'analyse de la phase du front d'onde dans le plan de la pupille après réflexion sur un miroir déformable. Une première solution est basée sur l'utilisation d'un analyseur de front d'onde, par exemple de type Shack-Hartmann, qui permet une mesure des déformations locales du front d'onde d'un faisceau optique. Cependant, un analyseur de front d'onde est coûteux est présente des limites géométriques. Le couplage d'un SHS à un microscope est contraignant car le diamètre de faisceau détecté étant limité (à environ 5mm), il est nécessaire d'adapter le grandissement du faisceau entre la pupille d'entrée du microscope et l'analyseur de front d'onde pour chaque objectif de microscope pour lequel le miroir déformable doit être calibré. De plus, la résolution spatiale de la phase par un analyseur de type Shack-Hartmann est limitée à environ 30x30 pixels.

Une deuxième solution repose sur la mesure et l'analyse de franges d'interférences dans un interféromètre de type Michelson ou Twyman-Green, pour en déduire les variations de phase du front d'onde. Ainsi, la publication D. Débarre et al. « Image-based adaptative optics for two-photon microscopy », Optics Letters, Vol. 34, N° 16, p. 2495-2497, utilise un miroir situé dans le plan focal de l'objectif afin de calibrer spécifiquement la région du miroir imagée dans la pupille arrière de l'objectif. Toutefois, les mesures interférométriques requièrent une procédure d'alignement minutieuse et nécessitent une source ayant une grande longueur de cohérence. Dans les applications de microscopie utilisant un faisceau laser impulsionnel, l'interféromètre nécessite une autre source optique, qui est généralement disposée à une autre position et à une autre longueur d'onde que celle de l'application visée. De plus, un interféromètre présente un encombrement difficilement compatible avec un microscope.

Un autre groupe de techniques est basé sur une mesure de la réponse impulsionnelle (ou PSF) en intensité dans le plan focal du dispositif et sur un calcul de reconstruction du front d'onde en amplitude et/ou en phase, par exemple suivant une méthode dite de diversité de phase. La mesure de réponse impulsionnelle consiste généralement à acquérir l'image d'un point source placé dans le plan focal du dispositif à travers le dispositif optique à caractériser. La méthode de diversité de phase consiste premièrement à mesurer au moins deux images d'un même objet avec un déphasage connu entre les deux images, deuxièmement à modéliser le champ complexe dans le plan de Fourier de chaque image, souvent en décomposant la phase sur une base de polynômes de Zernike, et enfin à appliquer un algorithme de minimisation sur les champs correspondant aux deux images pour en extraire une reconstruction spatiale du front d'onde en amplitude et/ou en phase.

Dans le cas d'un télescope à optique adaptative pour l'astronomie, Löfdahl *et al.* a proposé un dispositif et un procédé de calibration d'un miroir déformable basé sur une méthode de diversité de phase (Löfdahl et al « Calibration of a deformable mirror and Strehl ratio measurements by use of phase diversity », Appl. Opt. 39, pp. 94-103, 2000). Le dispositif expérimental de mesure de PSF comprend un point source générateur d'un faisceau optique d'entrée, une pupille éclairée de manière uniforme, un miroir déformable réfléchissant le faisceau sous une ouverture numérique quasi-nulle, et une lentille de grande focale formant l'image du faisceau réfléchi par le miroir déformable sur une caméra de haute résolution. Deux images de PSF déphasées sont obtenues par l'insertion d'un prisme devant la caméra qui forme ainsi deux images défocalisées axialement l'une par rapport à l'autre. La calibration de l'influence du miroir déformable sur le front d'onde est ensuite obtenue par une méthode classique d'évaluation et de minimisation du front d'onde suivant une décomposition sur une base de polynômes de Zernike. Cependant, selon la méthode de Löfdahl et al., la matrice de calibration du miroir déformable est non seulement bruitée mais incomplète, car cette méthode ne permet pas de mesurer le *tip* et le *tilt* induits par le miroir déformable, qui doivent être calibrés par une mesure indépendante. Par ailleurs, alors qu'un télescope agrandit l'image d'un point source, un microscope en forme une image de taille plus petite. La méthode de calibration de Löfdahl ne peut donc pas être utilisée directement en microscopie où l'objectif de microscope focalise le faisceau en une tache trop petite pour être visualisée directement et où l'ouverture numérique de l'objectif est généralement élevée.

En microscopie, la reconstruction de front d'onde par diversité de phase a été modifiée pour être appliquée à des dispositifs ayant des ouvertures numériques importantes (Hanser et al, « Phase-retrieved pupil functions in wide-field fluorescence microscopy », J . Microscopy 216, pp.32-48 (2004) ; Hanser et al, « Phase retrieval for high-numerical-aperture optical systems », Opt. Lett. 28, pp.801-803 (2003)). En particulier, dans un dispositif ayant une grande ouverture numérique, la fonction de la pupille du système ne peut plus être considérée comme constante.

Théoriquement, la PSF correspond à l'image d'un point source infiniment petit, de longueur d'onde λ et situé au centre du plan focal de l'objectif. Expérimentalement, pour la mesure de PSF d'un microscope optique, Hanser *et al.* choisissent un point source formé par une bille fluorescente de taille inférieure à la limite de résolution optique du microscope, la bille étant placée dans le plan focal du microscope et éclairée par un faisceau d'excitation. Cependant, le signal de fluorescence de ces billes est limité à la fois en intensité et dans le temps, ce qui limite le rapport signal sur bruit accessible pour la mesure de PSF. La faiblesse du signal nécessite l'utilisation d'une caméra de très haute sensibilité d'où un coût important du dispositif. D'autre part, afin d'améliorer l'analyse on est tenté d'augmenter la complexité de l'algorithme de reconstruction, ce qui diminue la précision du résultat obtenu. De plus, les billes utilisées ont une taille finie, ce qui produit des erreurs dans les mesures de PSF, qui peuvent être critiques en microscopie. Enfin, les publications Hanser 2003 et Hanser 2004 ne concernent pas un microscope à modulateur optique spatial.

En microscopie optique adaptative, la publication Turaga et al. décrit une méthode de calibration d'un miroir déformable par une variante de la diversité de phase (<< Image-based calibration of a deformable mirror in wide-field microscopy », Turaga et al., Appl. Opt. 49, pp.2030-2040, 2010). Dans ce cas, la mesure de PSF d'une bille fluorescente est effectuée dans le seul plan focal de l'objectif (pas d'images déphasées) et l'algorithme de reconstruction utilise l'ensemble des mesures effectuées pour les différentes commandes envoyées sur les différents actionneurs du miroir déformable afin de déterminer le profil de phase du faisceau en sortie de l'objectif. Ce procédé présente deux limitations majeures. D'une part, le profil d'intensité du faisceau est supposé connu, ce qui n'est généralement pas le cas, et invariant, ce qui restreint l'application de la méthode à la calibration d'un miroir déformable conjugué avec la pupille d'entrée de l'objectif. D'autre part, le temps de calcul nécessaire à la reconstruction des profils de phase est très important (3 minutes par élément actif pour un système ayant 32Go de RAM, soit environ 2h30 pour un miroir déformable ayant 52 actionneurs).

Enfin, plus fondamentalement, dans les publications Löfdahl *et al.*, Hanser *et al.* et Turaga *et al.*, du fait du nombre réduit de mesures effectuées (1 ou 2), la robustesse de l'algorithme de minimisation doit être en compensation assurée par la modélisation a priori du front d'onde recherché, qui est décomposé selon des modes de Zernike ou selon une autre base de fonctions, supposées orthogonales, et mieux adaptée à la géométrie du miroir déformable. Ceci réduit intrinsèquement la précision de la reconstruction de la phase et limite le procédé de calibration au cas où le miroir, positionné dans un plan conjugué de la pupille d'entrée de l'objectif, induit une pure modulation de phase et où l'amplitude du champ dans la pupille arrière est considérée comme constante.

Dans le présent document, les termes pupille arrière et pupille d'entrée sont utilisés comme synonymes et se réfèrent au plan conjugué du plan focal de l'objectif.

La publication Botcherby et al, « an optical technique for remote focusing in microscopy », Opt. Comm. 281, pp.880-887 (2008) décrit une méthode alternative de mesure de PSF d'un objectif de microscope. Cette méthode utilise un miroir placé à proximité du plan focal de l'objectif du microscope et une caméra CCD située dans un plan conjugué du plan focal de l'objectif. On acquiert des images pour différentes positions décalées axialement du miroir plan ou de la caméra de manière à obtenir la PSF en intensité en trois dimensions. Toutefois, cette mesure de PSF n'est utilisée ni pour reconstruire un profil de champ en amplitude et en phase, ni a fortiori dans le contexte de calibration d'un miroir déformable.

### Problème technique

Un des buts de l'invention est de proposer un dispositif et un procédé de calibration précis et fiable d'un modulateur optique spatial *in situ* dans un microscope.

Un autre but de l'invention est de proposer un dispositif de calibration d'un modulateur optique spatial compatible avec différents objectifs de microscope sans requérir d'adaptation instrumentale à chaque changement d'objectif.

Encore un autre but de l'invention est de proposer un procédé de calibration permettant une calibration de haute résolution spatiale et de grande précision y compris pour les points périphériques du champ de la pupille arrière où l'intensité du faisceau optique est relativement faible.

La présente invention a pour but de proposer une méthode pour calibrer l'influence des commandes appliquées aux éléments d'un modulateur optique spatial sur les propriétés optiques d'un microscope dans ou en amont duquel un modulateur optique spatial est inséré.

A cet effet, l'invention concerne un procédé de calibration d'un dispositif optique à modulateur optique spatial, ledit dispositif comprenant un point source lumineux, un objectif optique de grande ouverture numérique apte à recevoir un faisceau incident et/ou à collecter un faisceau optique réfléchi par un échantillon, une caméra disposée dans un plan conjugué optiquement avec le plan focal de l'objectif et un modulateur optique spatial disposé sur le faisceau optique en amont de la caméra. Selon l'invention, ledit procédé comprend les étapes suivantes :
a) mise en place d'un échantillon plan réfléchissant au voisinage du plan focal de l'objectif,
b) application d'une commande d'amplitude Rⁱⱼ sur un élément Pᵢ du modulateur optique spatial, de manière à moduler le faisceau optique incident et/ou réfléchi sur l'échantillon,
c) acquisition d'une image de la PSF en intensité dans un plan conjugué du plan focal de l'objectif,
d) modification de la distance axiale relative entre l'objectif et l'échantillon réfléchissant d'une quantité Z connue ;
e) itération des étapes c) et d) pour une pluralité de distances axiales relatives entre l'échantillon et le plan focal de l'objectif;
f) reconstruction du profil en amplitude et/ou en phase du faisceau dans un plan conjugué du plan focal de l'objectif par un algorithme de diversité de phase pour une valeur Rⁱⱼ d'un élément Pᵢ ;
g) itération des étapes b) à f) pour une pluralité de valeurs d'amplitude Rⁱⱼ pour un élément Pᵢ du modulateur optique spatial;
h) détermination de la fonction d'influence Eᵢ d'un élément Pᵢ sur le profil en amplitude A et/ou en phase ϕ du faisceau ;
i) itération des étapes b) à h) pour les différents éléments P_{i i= 1}, ...,_{N} du modulateur optique spatial ;
j) détermination des fonctions d'influences (E₁, ... E_{N}) de l'ensemble des éléments (P₁, ... P_{N}) du modulateur optique spatial sur le profil en amplitude A et/ou en phase ϕ du faisceau.

Selon un mode de réalisation particulier de l'invention, les mesures de PSF sont effectuées pour trois distances axiales relatives entre l'objectif et l'échantillon définies par rapport à la position de l'échantillon dans le plan focal de l'objectif telles que : z = (-z₀, 0, + z₀).

Selon un mode de réalisation préféré, l'étape f) de reconstruction du profil en amplitude et/ou en phase du faisceau par diversité de phase comprend les étapes suivantes :
Initialisation :
   - Estimation d'un terme de défocus correspondant aux trois positions relatives : -z₀, 0 et +z₀ ;
   - Estimation initiale du profil du champ dans la pupille d'entrée de l'objectif ;
   - Estimation du profil de transmission de la pupille d'entrée de l'objectif ;
Algorithme de calcul :
   - Calcul de trois profils de champ par multiplication du profil du champ estimé dans la pupille d'entrée de l'objectif respectivement par chacun des trois termes de défocus ;
   - Application d'une transformée de Fourier pour calculer les PSF estimées pour les trois positions relatives : -z₀, 0 et + z₀;
   - Remplacement de l'amplitude des PSF calculées par la valeur des PSF mesurées respectivement pour chacune des valeurs de z (-z₀, 0, + z₀) ;
   - Application d'une transformée de Fourier inverse pour les trois champs obtenus ;
   - Division par le terme de défocus correspondant respectivement à chaque position z (-z₀, 0 et +z₀ ) ;
   - Moyenne des trois champs complexes obtenus ;
   - Multiplication de la moyenne des champs par le profil de transmission de la pupille d'entrée de l'objectif, pour obtenir une nouvelle estimation du profil du champ au niveau de la pupille arrière de l'objectif ;
   - Itération de l'ensemble des étapes de l'algorithme de calcul de reconstruction du profil en amplitude et/ou en phase jusqu'à ce qu'une condition de terminaison soit remplie ;
Terminaison :
   - Calcul de l'écart quadratique en amplitude entre les trois PSF calculées et mesurées. Si la valeur est inférieure à un critère de convergence (typiquement de l'ordre de 10⁻⁶ en écart relatif), l'algorithme est terminé.
   - La phase du profil est extraite et dépliée à l'aide d'un algorithme par transformée de Fourier.

Selon un mode de réalisation particulier, le procédé de calibration de l'invention comprend une étape supplémentaire préalable à l'étape j), ladite étape supplémentaire consistant en une itération des étapes b) à i) pour différentes combinaisons de commandes simultanées d'une pluralité d'éléments du modulateur optique spatial.

Selon un aspect particulier d'un mode de réalisation, le procédé de calibration de l'invention comprend suite à l'étape c) une étape supplémentaire de filtrage numérique des images de PSF mesurées de manière à diminuer la résolution spatiale et/ou adapter la dimension des images à la taille de la pupille de l'objectif.

Selon un mode de réalisation particulier, le procédé de calibration de l'invention comprend suite à l'étape j) une étape supplémentaire d'inversion des fonctions d'influence de l'ensemble des éléments (P₁, ... P_{N}) du modulateur optique spatial par un algorithme de régression linéaire pour en extraire une calibration du miroir déformable en amplitude A(x, y) = M_{A} (Rⁱₜ) et/ou Rⁱₜ = M_{A}⁻¹ (ϕ(x, y)) et respectivement en phase ϕ(x, y) = M_{ϕ} (Rⁱₜ) et/ou Rⁱₜ = M_{ϕ}⁻¹ (ϕ(x, y)).

L'invention concerne aussi un système de calibration d'un dispositif optique à modulateur optique spatial, ledit dispositif comprenant un point source lumineux générant un faisceau incident, un objectif optique de grande ouverture numérique apte à recevoir un faisceau incident et/ou à collecter un faisceau optique réfléchi par un échantillon, une image du point source étant formée dans le plan focal de l'objectif, un modulateur optique spatial comprenant une pluralité d'éléments (P₁, ... P_{N}) et des moyens de commande desdits éléments (P₁, ... P_{N}) dudit modulateur optique spatial, le modulateur optique spatial étant disposé sur le faisceau optique de manière à moduler le faisceau optique incident et/ou réfléchi, ledit système de calibration comprenant :
- un échantillon plan réfléchissant disposé au voisinage du plan focal de l'objectif ;
- un moyen d'ajustement de la distance z entre le plan focal de l'objectif et ledit échantillon ;
- un système optique apte à recevoir une partie du faisceau réfléchi par ledit échantillon et à former une image du plan focal de l'objectif dans un plan conjugué ;
- une caméra disposée dans ledit plan conjugué optiquement avec le plan focal de l'objectif ;
   et
- un système de contrôle comprenant une unité de commande du moyen d'ajustement de la distance z, une unité de commande des éléments (P₁, ... Pᵢ, ... P_{N}) du modulateur optique spatial, une unité de traitement des images acquises par la caméra pour une pluralité de distances z apte à en déduire une mesure de la PSF du dispositif et des moyens de calcul aptes à déterminer les valeurs des commandes à appliquer respectivement sur le moyen d'ajustement de la distance z et sur les éléments du modulateur optique spatial en fonction des mesures de la PSF.

Selon différents aspects particuliers du système de calibration de l'invention, les moyens de calcul comprennent :
- des moyens de reconstruction du profil en amplitude et/ou en phase du faisceau utilisant un algorithme de diversité de phase ;
- des moyens de détermination des fonctions d'influences (E₁, ... E_{N}) de l'ensemble des éléments P₁, ... P_{N} du modulateur optique spatial sur le profil en amplitude A et/ou en phase ϕ du faisceau ; et/ou
- des moyens d'inversion des fonctions d'influence de l'ensemble des éléments P₁, ... P_{N} du modulateur optique spatial par un algorithme de régression linéaire et des moyens de minimisation pour en déduire une calibration du modulateur optique spatial.

La présente invention concerne également les caractéristiques qui ressortiront au cours de la description qui va suivre et qui devront être considérées isolément ou selon toutes leurs combinaisons techniquement possibles.

Cette description, donnée à titre d'exemple non limitatif, fera mieux comprendre comment l'invention peut être réalisée en référence aux dessins annexés sur lesquels :
- la figure 1 représente schématiquement un dispositif de calibration selon un premier mode de réalisation de l'invention ;
- la figure 2 représente schématiquement un dispositif de calibration selon un second mode de réalisation de l'invention ;
- la figure 3 représente schématiquement un dispositif de calibration selon un troisième mode de réalisation de l'invention;
- la figure 4 représente schématiquement les principales étapes du procédé de l'invention ;
- la figure 5 représente schématiquement une variante d'une étape d'initialisation de l'algorithme de diversité de phase ;
- la figure 6 représente schématiquement une variante de l'algorithme de diversité de phase selon un mode de réalisation de l'invention ;
- la figure 7 représente schématiquement une variante d'une étape de détermination d'une fonction d'influence d'un élément Pᵢ d'un modulateur optique spatial.

### Description détaillée

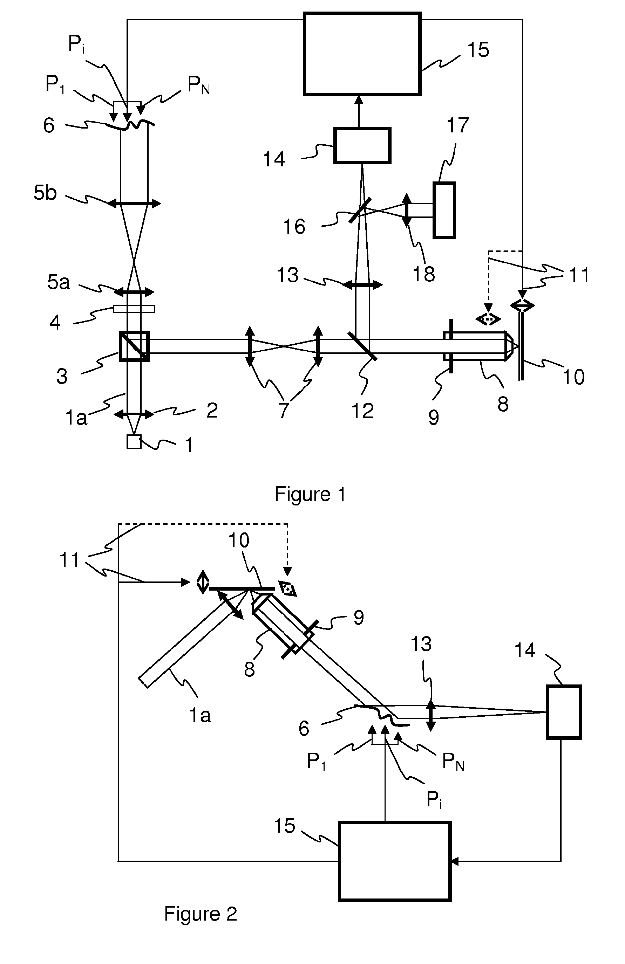

La figure 1 représente un premier exemple de réalisation d'un dispositif expérimental de calibration d'un modulateur optique spatial 6 dans un microscope. Dans l'exemple représenté le modulateur optique spatial est un miroir déformable comprenant une pluralité d'actionneurs. Toutefois, le modulateur optique spatial pourrait être un autre type de modulateur spatial (SLM à cristaux liquides par exemple), sans soritr du cadre de l'invention. On n'a représenté sur la figure 1 qu'une partie des composants du microscope. En particulier, le tube du microscope n'est pas représenté sur la figure 1.

Une source lumineuse 1 génère un faisceau d'excitation 1a destiné à éclairer un échantillon 10. La source lumineuse peut faire partie du microscope ou être couplée à un port d'entrée du microscope. La source peut être une source continue ou une source impulsionnelle, telle qu'un laser à impulsions. La source 1 est avantageusement la source destinée à être utilisée ensuite dans l'application visée. Dans le cas d'une source laser, l'étendue spatiale de la source peut être très limité, si bien qu'un diaphragme d'entrée n'est pas nécessaire. Dans le cas d'une source étendue spatialement, un diaphragme suffisamment petit pour être considéré comme ponctuel doit être disposé sur le faisceau incident dans un plan conjugué optiquement du plan focal de l'objectif (en pratique la taille du diaphragme doit être au plus la moitié de la largeur de la tache d'Airy correspondant à la PSF idéale d'excitation du système). Dans la suite du présent document, la source lumineuse 1 est assimiliée à un point source.

Le faisceau source 1a est couplé au trajet optique du microscope par un système optique 2.

Un cube séparateur en polarisation 3 envoie le faisceau incident en direction et d'une lame 4 (de type lame λ/4) et d'un système optique afocal 5a, 5b pour éclairer un miroir déformable 6. Le miroir déformable 6 est placé dans ou en amont du microscope de manière à induire une modulation du front d'onde du faisceau lumineux excitateur. Le miroir déformable 6 a une surface réfléchissante qui peut être déformée par des actionneurs P₁, ... Pᵢ, ... P_{N}. Il existe différentes technologies d'actionneurs (magnétiques, piezo-électrique ...). Les actionneurs sont commandés par un système de contrôle 15, qui peut envoyer des commandes à un seul actionneur ou simultanément à plusieurs actionneurs. Le miroir déformable 6 utilisé en réflexion sur le faisceau incident est conjugué avec la pupille d'entrée 9 d'un objectif de microscope 8.

Le cube séparateur en polarisation 3 reçoit le faisceau réfléchi et modulé par le miroir déformable 6. Après un double passage à travers la lame λ/4 orientée à 45° de la polarisation incidente, l'état de polarisation du faisceau est tourné de 90° et le faisceau initialement transmis par le cube 3 est réfléchi sans perte de puissance. Le cube 3 renvoie le faisceau modulé vers un système optique 7 qui le dirige vers l'objectif de microscope 8, de manière à couvrir le champ de la pupille 9. Le diamètre de la pupille 9 détermine généralement l'ouverture numérique de l'objectif de microscope 8. L'ouverture numérique d'un objectif de microscope est généralement comprise entre 0,2 et 1,45.

Le microscope comprend un porte échantillon sur lequel on dispose un échantillon 10 placé au voisinage du point focal de l'objectif de microscope 8. L'échantillon 10 est de préférence un miroir plan. Si l'objectif 8 utilisé est conçu pour être utilisé avec une lamelle couvrant l'échantillon, une lamelle de l'épaisseur requise est collée sur le miroir à l'aide de colle optique ou d'une goutte d'huile pour objectif. Dans le cas d'un objectif de microscope à immersion dans un milieu d'indice optique, un milieu d'immersion (par exemple : air, eau, glycérol, huile) d'indice adapté à l'objectif à immersion est rajouté entre le miroir et/ou la lamelle et l'objectif afin de se placer dans des conditions normales d'utilisation de l'objectif.

Le porte échantillon est monté sur un système de positionnement 11, par exemple piézoélectrique, assurant le déplacement axial relatif entre l'objectif 8 et l'échantillon 10, éventuellement couvert par une lamelle selon l'objectif utilisé.

Le dispositif de calibration de la figure 1 comprend une lame séparatrice 12 (par exemple une lame semi-réfléchissante) placée en amont de l'objectif 8. La lame 12 prélève une partie du faisceau réfléchi par l'échantillon 10 qui est ensuite focalisé par un système optique 13 sur une caméra 14, de manière à ce que le plan de détection de la caméra 14 soit conjugué optiquement avec le plan focal de l'objectif 8.

Le système de contrôle 15 comprend une unité de commande des actionneurs P₁, ...Pᵢ, ...P_{N} du miroir déformable 6, une unité de commande du système de positionnement 11 objectif-échantillon, une unité de traitement d'images pour traiter les images acquises par la caméra 14 et une unité de calcul pour déterminer les valeurs des commandes à appliquer respectivement sur les actionneurs P₁, ...Pᵢ, ...P_{N} du miroir déformable 6 et sur le système de positionnement 11 de distance axiale objectif-échantillon, en fonction des mesures de la PSF image suivant un algorithme détaillé plus loin.

Afin de comparer les mesures obtenues par le dispositif de calibration de l'invention avec celles obtenues directement par un senseur de front d'onde connu, on dispose un miroir amovible 16 sur le trajet du faisceau réfléchi par l'échantillon, un analyseur de front d'onde 17 de type Shack-Hartmann (SHS) et une lentille 18 de couplage optique. La lentille 18 est choisie selon l'objectif 8 pour adapter la taille du profil du faisceau à celle du senseur de front d'onde 17. Plutôt que d'utiliser plusieurs lentilles 18, on peut aussi utiliser un télescope à focale variable. L'analyseur de front d'onde 17 peut ainsi fournir une mesure de référence de la distribution spatiale du front d'onde dans le plan de la pupille 9. Toutefois, le SHS 17, la lentille 18 et le miroir amovible 16 ne font pas partie du dispositif de calibration de l'invention.

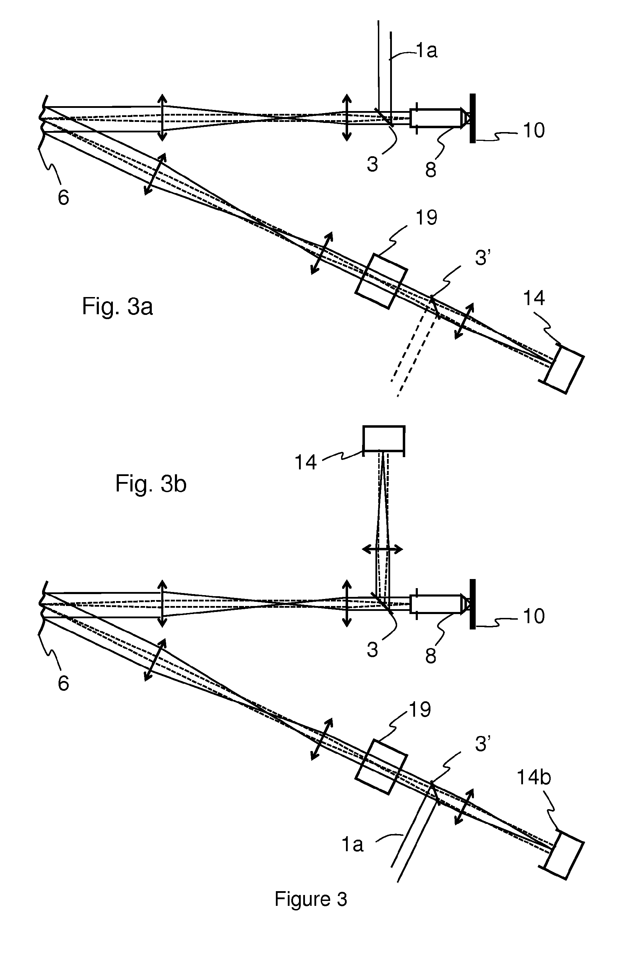

Nous allons maintenant décrire le fonctionnement du dispositif de la Figure 1. Le faisceau source 1a est couplé par un système optique 5a, 5b au miroir déformable 6. Le miroir déformable 6 induit une modulation du front d'onde du faisceau lumineux excitateur. Cette modulation se traduit par une variation du profil de phase et d'amplitude dans le plan de la pupille d'entrée 9 de l'objectif 8 du microscope. Ces variations du profil du front d'onde induisent une variation de la réponse impulsionnelle excitatrice (PSF) en intensité du microscope détectée par la caméra 14. C'est cette variation de profil du front d'onde qui est utilisée pour corriger les aberrations induites par le microscope ou par l'échantillon lui-même, ou encore pour façonner la PSF à des fins d'imagerie, de photoactivation, de photoablation, etc. Dans le cas où le signal détecté est à nouveau réfléchi sur le miroir déformable 6 (cf dispositif de la figure 2 ou 3), on a également une modulation de la réponse impulsionnelle de détection.

De manière générale, pour calibrer l'ensemble des modulations induites par le miroir déformable 6, nous considérons dans la suite de ce document, non pas uniquement la PSF d'excitation mais la PSF résultante obtenue dans le plan où sont situés les détecteurs. La PSF dépend intrinsèquement des différents éléments présents sur le trajet optique - miroir déformable 6, composants optiques du microscope, objectif 8 - mais aussi de leur position relative. L'influence de chaque élément actif (ou actionneur P₁, ...Pᵢ, ... P_{N}) du miroir déformable 6 dépend du montage optique réalisé. Pour être précise, la calibration du miroir doit donc être réalisée *in situ* dans la configuration de mesure de l'application visée.

La figure 2 représente un second exemple de réalisation d'un dispositif expérimental de calibration d'un miroir déformable 6 dans un autre type de microscope, fonctionnant en réflexion sous incidence oblique. Le dispositif de la figure 2 comporte des éléments similaires à ceux du dispositif de la figure 1, le miroir déformable étant disposé non pas sur le trajet du faisceau excitateur mais sur le trajet du faisceau réfléchi par l'échantillon 10. Un système optique 13 forme l'image du faisceau réfléchi par l'échantillon et modulé par le miroir déformable 6 sur la caméra 14. De manière identique au dispositif de la figure 1, un système de contrôle 15 comprend une unité de commande des actionneurs P₁, ...Pᵢ, ...P_{N} du miroir déformable 6, une unité de commande du système de positionnement 11 objectif-échantillon, une unité de traitement des images acquises par la caméra 14 et une unité de calcul pour déterminer les valeurs des commandes à appliquer respectivement sur les actionneurs du miroir déformable 6 et sur le système de positionnement 11, en fonction des mesures de la PSF image suivant un algorithme détaillé plus loin.

Le dispositif illustré sur la figure 1 représente un montage où une lame séparatrice 12 est placée juste en amont de l'objectif 8, ce qui est idéal pour mesurer la PSF d'excitation. Cependant l'ensemble lame séparatrice 12, lentille 13 et caméra 14 peut être placé n'importe où dans le trajet du faisceau tant que la caméra 14 est conjuguée avec le plan focal de l'objectif 8 et qu'avant d'atteindre la caméra, le faisceau n'est pas réfléchi sur le modulateur spatial avant et après passage par l'objectif. Dans le cas par exemple où l'on souhaite mesurer l'influence du miroir déformable sur la PSF totale (excitation+détection) d'un microscope confocal, les deux PSF (excitation et détection) doivent être mesurées successivement. On peut cependant généralement les confondre si les longueurs d'onde d'excitation et de détection sont identiques ou proches, et réaliser seulement la mesure la plus pratique selon la géométrie du dispositif. Ainsi, la figure 3 représente un troisième exemple de réalisation d'un dispositif expérimental de calibration d'un miroir déformable 6 dans un microscope. Le dispositif de la figure 3 comporte des éléments similaires à ceux des dispositifs des figures 1 et 2, le miroir déformable 6 étant ici disposé lors de l'imagerie à la fois sur le trajet du faisceau excitateur et sur le trajet du faisceau réfléchi ou créé par l'échantillon dont on fait l'image. Pour calibrer un tel microscope, on peut alors mesurer la psf de détection (figure 3a) en modifiant le trajet du faisceau incident et en plaçant la caméra 14 à la place du détecteur habituel ; ou encore mesurer la psf d'excitation (figure 3b) en plaçant l'ensemble lame séparatrice 12, lentille 13 et caméra 14 juste après l'objectif. A titre d'exemple, le dispositif représenté sur la figure 3 comprend un dispositif de balayage 19 du faisceau encore appelé scanner XY, qui permet d'effectuer un balayage du faisceau laser sur l'échantillon, et un détecteur ponctuel (par exemple pinhole+photomultiplicateur) permettant de détecter le signal confocal.

Le procédé de calibration de l'invention s'applique également dans le cas d'un microscope droit, inversé ou horizontal. Dans tout les cas, on utilise un miroir plan à proximité du point focal, et si nécessaire une lamelle de microscope par dessus qui peut être fixée par un point d'huile pour microscope ou de colle optique.

### Procédé de calibration

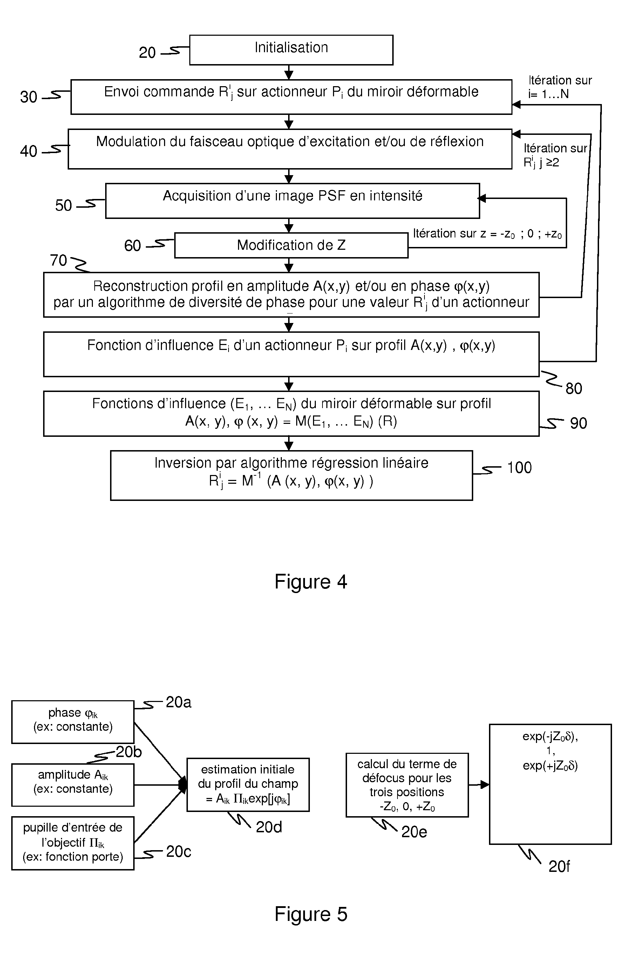

La figure 4 représente schématiquement les principales étapes du procédé de calibration de l'invention, basé sur un algorithme de diversité de phase.

La calibration du miroir déformable 6 est effectuée à partir des étapes suivantes :
- initialisation du système (étape 20), le miroir plan 10 étant positionné à une première position au voisinage du plan focal de l'objectif, définie par la distance z₀ entre le miroir plan et le plan focal de l'objectif 8,
- envoi d'un vecteur de commande au miroir déformable 6 (étape 30), de manière à moduler le faisceau optique d'excitation et/ou de réflexion (étape 40)
- mesure de la PSF tridimensionnelle du dispositif optique complet (étapes 50-60),
- reconstruction du profil de phase et/ou d'intensité au niveau de la pupille d'entrée du microscope à partir de la mesure de PSF tridimensionnelle (étape 70),
- itération pour différents vecteurs de commande jusqu'à ce que l'influence de chaque actionneur (si le miroir déformable 6 est linéaire) ou de chaque combinaison possible de commandes d'actionneurs (si le miroir déformable 6 n'est pas linéaire) soit connue (étapes 80-90)
- inversion des fonctions d'influence pour en déduire la calibration du miroir déformable (étape 100).

Selon un mode de réalisation préféré de l'invention, le procédé comprend les étapes suivantes :
- la mesure de PSF en intensité du microscope est effectuée à l'aide d'un miroir plan 10 placé à proximité du plan focal de l'objectif 8 pour réfléchir un faisceau d'excitation et d'une caméra 14 placée dans un plan conjugué du plan focal de l'objectif ;
- acquisition de trois mesures de PSF pour trois positions axiales différentes et connues du miroir plan à l'aide d'un dispositif de déplacement axial du porte-échantillon ou de l'objectif (étapes 50-60) ;
- reconstruction -à un facteur près- du profil de phase et d'amplitude du faisceau excitateur dans le plan de la pupille 9 de l'objectif 8 à partir des trois mesures de PSF axiales en utilisant un algorithme itératif (étape 70);
- itération des étapes précédentes pour différentes positions de chaque actionneur du miroir déformable (étapes 30 à 70) ;
- calcul de la fonction d'influence complexe des actionneurs du miroir déformable sur le champ optique en entrée de l'objectif (qui détermine la PSF tridimentionnelle) (étapes 80-90) ;
- détermination complète et intrinsèquement *in situ* de l'influence du miroir déformable sur les propriétés optiques du microscope, déterminées par sa PSF (étape 100).

### Étapes détaillées du Procédé

Nous allons maintenant détailler les différentes étapes.

### ∘ I - Mesure de la PSF

Prenons par exemple la configuration représentée sur la figure 1. Supposons que la transmission de l'objectif 8 est uniforme sur l'ensemble de sa pupille d'entrée 9 et que l'objectif 8, la lame semi-réfléchissante 12 et la lentille 13 n'induisent pas d'aberrations du front d'onde du faisceau. On peut montrer qu'on mesure directement sur la caméra CCD 14 une image de la PSF, agrandie du facteur de grandissement du couple objectif 8 - lentille 13, à la position axiale 2 x z₀ par rapport au plan focal de l'objectif, où z₀ est la distance du miroir plan 10 par rapport au plan focal de l'objectif 8. Ainsi, en changeant la distance z₀ entre le miroir plan 10 et l'objectif du microscope 8, on peut reconstruire une image tridimentionnelle de la PSF du système.

Dans le cas où les aberrations induites par l'objectif 8, la lentille 13 et/ou la lame réfléchissante 12 ne peuvent être négligées ou dans le cas où le profil de transmission de l'objectif 8 n'est pas uniforme, il existe une modulation supplémentaire de la fonction de transfert optique (décrivant la modification du profil de phase et d'intensité du faisceau), donc la PSF mesurée n'est plus directement celle obtenue au niveau du plan focal. Cependant, cette modulation est constante lorsque la forme du miroir déformable 6 est modifiée, si bien que la variation du profil de phase et d'intensité du faisceau liée au miroir déformable 6 peut malgré tout être déterminée avec la même précision.

Dans le cas où le miroir déformable 6 est disposé sur le faisceau d'excitation, on mesure ainsi la PSF d'excitation (cas de la figure 1). De même, lorsque le miroir déformable 6 est disposé sur le faisceau réfléchi par l'échantillon, on mesure la PSF de détection (cas de la figure 2). Enfin, dans le cas où le miroir déformable 6 est situé sur le trajet du faisceau excitateur et du faisceau réfléchi (cas de la figure 3), on mesure soit l'une, soit l'autre, soit les deux pour obtenir l'influence du miroir déformable sur la PSF totale (excitation + détection) du microscope.

### ∘ II - Reconstruction du profil de phase et d'intensité du faisceau

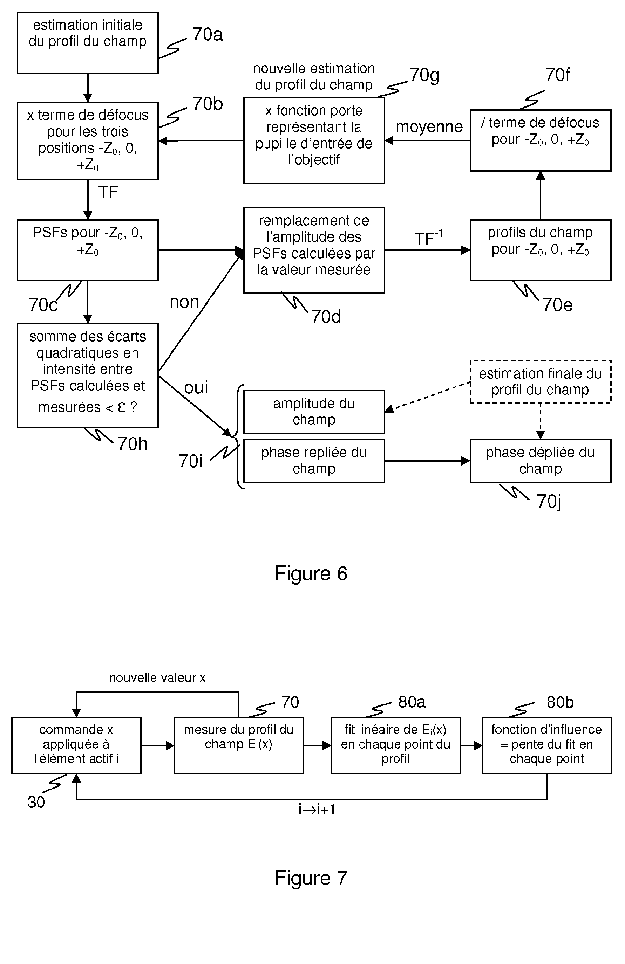

Les figures 5 à 7 représentent schématiquement un exemple de réalisation d'un algorithme de reconstruction du profil en amplitude et/ou en phase du faisceau à partir de la mesure tridimensionnelle de PSF par un algorithme de diversité de phase. La figure 5 représente les étapes d'initialisation de l'algorithme de calcul, et la figure 6 les étapes itératives de reconstruction.

L'initialisation de l'algorithme (figure 5) comprend tout d'abord une initialisation (étape 20a) du profil de phase en entrée par une fonction ϕᵢₖ, par exemple constante sur le champ de la pupille d'entrée 9. De même, on initialise l'amplitude Aᵢₖ du champ sur la pupille d'entrée 9 (étape 20b), l'amplitude Aᵢₖ étant par exemple supposée constante. Le profil de transmission de la pupille d'entrée 9 de l'objectif est estimé (étape 20c), par une fonction Πᵢₖ qui est par exemple une fonction porte. On en déduit une estimation initiale du profil du champ égale au produit Aᵢₖ Πᵢₖ exp[jϕᵢₖ] (étape 20d). D'autre part, pour obtenir une bonne convergence de l'algorithme de diversité de phase dans des conditions typiques de bruit sur le signal, trois images de la PSF sont nécessaires dans des plans z₀ différents. On part de l'estimation initiale du profil de champ obtenue à l'étape 20d. On estime un terme de défocus qui est égal respectivement à exp(-jz₀δ), 1 et exp(+jz₀δ), pour les trois positions relatives : -z₀, 0 et +z₀ (étapes 20e- 20f).

La figure 6 représente schématiquement un algorithme de reconstruction du profil en trois dimensions par diversité de phase. Après l'initialisation (étape 70a, par exemple comme indiqué suivant les étapes 20a, 20b, 20c, 20d en lien avec la figure 5), on dispose d'une estimation initiale du profil du champ et d'une estimation initiale du terme de défocus δ pour les trois positions relatives : -z₀, 0 et +z₀ (par exemple comme indiqué suivant les étapes 20e-20f de la figure 5). A l'étape 70b, on calcule trois profils de champ par multiplication du profil du champ initial respectivement par chacun des trois termes de défocus : exp(-jz₀δ), 1 et exp(+jz₀δ). On applique une transformée de Fourier (TF) pour calculer les PSF estimées pour les trois positions relatives : -z₀, 0 et +z₀ (étape 70c). Puis, on remplace l'amplitude des PSF calculées par la valeur des PSF mesurées respectivement pour chaque valeur de z (étape 70d). On applique une opération de transformée de Fourier inverse (TF⁻¹) pour les trois champs obtenus (étape 70e). On divise par le terme de défocus correspondant à chaque position : -z₀, 0 et +z₀ (étape 70f). On calcule la moyenne des trois champs complexes obtenus (étape 70g). On multiplie la moyenne des trois champs par le profil de transmission de la pupille d'entrée de l'objectif (étape 70g). Le profil ainsi obtenu sert de nouvelle estimation du champ au niveau de la pupille arrière de l'objectif. Les étapes 70b à 70g sont itérées jusqu'à ce qu'une condition de terminaison soit remplie (étape 70h).

L'étape de terminaison comprend par exemple un calcul de l'écart quadratique en amplitude entre les trois PSF calculées et mesurées. Si la valeur est inférieure à un critère de convergence (typiquement de l'ordre de 10⁻⁶ en écart relatif), l'algorithme est terminé. On obtient à ce stade une estimation du profil de champ comprenant d'une part l'amplitude du champ et d'autre part la phase généralement repliée (modulo 2π) du champ (étape 70i). Une étape supplémentaire (étape 70j) permet d'extraire la phase du profil dépliée à l'aide d'un algorithme par transformée de Fourier. Un exemple d'algorithme de dépliement de phase est décrit dans la publication D.C. GHIGLIA, M.D. PRITT "Two dimensional phase unwrapping: theory, algorithms & software", ed. Wiley (1998).

L'algorithme utilisé permet une reconstruction complète du profil de phase et d'amplitude avec pour seuls paramètres : la taille des pixels de la caméra, la longueur d'onde du faisceau, le grandissement optique entre le plan focal et le plan de la caméra, l'écart axial entre les trois positions z₀ utilisées, l'ouverture numérique de l'objectif et l'indice du milieu d'immersion utilisé. Selon la valeur de ces paramètres et afin d'accélerer la convergence de l'algorithme, les images de départ peuvent être rognées (diminution de la résolution finale sur les profils de phase et d'intensité obtenus) ou « binées » (ajustement du profil reconstruit à la taille de la pupille d'entrée du microscope pour éviter des marges excessives). Dans une implémentation actuelle avec un ordinateur récent (2 Go Ram, processeur 2GHz), la reconstruction prend environ 2 secondes par profil de phase.

### ∘ III - Calibration du miroir déformable

Dans le cas le plus courant où le fonctionnement du miroir déformable 6 est linéaire, la calibration est obtenue en déterminant la fonction d'influence Eᵢ (sur le profil du faisceau) de chaque actionneur Rᵢ. Le procédé est représenté schématiquement par le diagramme d'étapes de la figure 7. Chaque actionneur Rᵢ est calibré l'un après l'autre : une série de commandes (au moins deux valeurs pour une gamme linéaire) est envoyée sur un actionneur Rᵢ et le profil correspondant est mesuré pour chaque valeur de commande. L'ajustement des différents profils obtenus permet finalement de déterminer la fonction d'influence Eᵢ de chaque élément Rᵢ.

Une fois les phases obtenues pour différentes valeurs de commande sur les éléments actifs du miroir, dans le cas d'un miroir ayant un comportement linéaire, une étape de régression linéaire est utilisée pour calculer la fonction d'influence de chaque élément actif. Ensuite, si on souhaite déterminer le vecteur de commande à envoyer au miroir pour obtenir un profil de phase et d'amplitude donnée, on passe par une étape supplémentaire pour obtenir une matrice de commande. Cette matrice relie directement la combinaison de modes (Zernike ou autres) que l'on souhaite obtenir (décrite par un vecteur de coefficients, un par mode) au vecteur de commande à envoyer sur chacun des éléments actifs. Par exemple, si l'on veut produire des modes de Zernike, chaque fonction d'influence Eᵢ est décomposée sur la base des modes de Zernike à produire et la matrice ainsi obtenue est pseudo-inversée pour obtenir la matrice de commande.

Dans le cas moins fréquent où le comportement du miroir déformable 6 n'est pas linéaire, c'est-à-dire lorsque les réponses des actionneurs ne sont pas indépendantes les unes des autres, il est nécessaire de mesurer la variation du profil du faisceau pour toute combinaison possible de commandes envoyée aux actionneurs du miroir déformable 6.

### ∘ Exemple de mesures expérimentales

Des mesures ont été réalisées sur un banc de test suivant un montage tel que représenté schématiquement sur la figure 1. Le miroir déformable 6 utilisé en réflexion est conjugué avec la pupille d'entrée 9 d'un objectif de microscope 8. Le miroir déformable comprend 52 actionneurs. Un miroir plan 10, éventuellement recouvert d'une lamelle selon l'objectif 8 utilisé, est monté sur un système de positionnement 11 de type piézoélectrique qui assure le déplacement relatif entre l'objectif 8 et le miroir plan 10. La détection de la PSF se fait sur une caméra CCD 8 bits comprenant une matrice de 1200x800 pixels.

Afin d'évaluer le dispositif et le procédé de calibration, un miroir amovible 16 est également utilisé pour mesurer le front d'onde sur un analyseur de front d'onde 17 de type Shack-Hartmann (SHS). Une lentille additionnelle 18 de couplage optique est choisie selon l'objectif 8 pour adapter la taille du profil du faisceau à celle du senseur de front d'onde 17.

Dans cette réalisation, le miroir déformable 6 est conjugué à la pupille d'entrée 9 de l'objectif de microscope 8. Il s'agit du cas le plus fréquent d'utilisation, pour lequel la modulation induite par le miroir concerne uniquement le profil de phase et non d'intensité du faisceau excitateur. Nous avons calculé le profil d'intensité et la fonction d'influence sur la phase reconstruits pour un des 52 éléments actifs du miroir déformable conjugué avec la pupille d'entrée d'un objectif 20x air, d'ouverture numérique 0.75. Les résultats obtenus ont été comparés à une mesure obtenue sur le dispositif de mesure de front d'onde Shack-Hartmann.

Afin d'évaluer la robustesse du processus utilisé, la fonction d'influence d'un même miroir déformable 6 est mesurée pour trois objectifs de microscope 8 très différents :
- un objectif de grandissement 20x à air, corrigé lamelle, d'ouverture numérique 0.75 (pupille d'entrée de 13.5mm) ;
- un objectif de grandissement 10x à air, sans lamelle, d'ouverture numérique 0.4 (pupille d'entrée de 9mm) ; et
- un objectif de grandissement 60x à eau, corrigé lamelle, d'ouverture numérique 1.2 (pupille d'entrée de 5.4mm).

La reconstruction de la phase dans le plan de la pupille de l'objectif suivant le procédé de l'invention donne des résultats tout à fait comparables aux mesures directes obtenues sur le senseur de front d'onde Shack-Hartmann, pour les trois objectifs. De plus, on observe que le procédé de l'invention permet d'obtenir une mesure de la phase avec une meilleure résolution spatiale que celle fournie par le Shack-Hartmann, même avec une caméra CCD standard qui présente une résolution d'un mégapixel, alors que les senseurs SHS couramment disponibles sont limités à environ 30x30 pixels. De plus, le SHS manque de précision sur les bords de l'image où le faisceau est le moins lumineux. Au contraire, le procédé de l'invention fournit un profil de phase avec une bonne sensibilité même sur la périphérie de l'image. Le procédé de l'invention prouve ainsi sa robustesse pour des objectifs de microscope de caractéristiques très variées qui couvrent un large éventail d'applications.

Une autre manière de vérifier l'exactitude des fonctions d'influence mesurées, est d'utiliser les fonctions d'influence déterminées par le procédé de l'invention pour calculer le vecteur de commande à envoyer au miroir déformable 6 de manière à produire des modes de Zernike. On choisit par exemple un mode de Zernike connu pour corriger de l'astigmatisme avec un objectif 60x. La mesure de PSF résultante montre que le mode de Zernike souhaité a été correctement produit par le vecteur de commande utilisé. Ceci est également confirmé par une mesure de front d'onde en utilisant le senseur de front d'onde Shack-Hartmann.

Le principal domaine d'applications envisagé est la microscopie optique avec mise en forme de front d'onde (correction des aberrations et/ou façonnage de la réponse impulsionnelle), notamment pour :
- l'imagerie : microscopie confocale, multiphoton, super-résolutive, etc.
- la photoablation laser ;
- la manipulation optique : photoactivation, décageage photo-induit, etc.

Le procédé et le dispositif de calibration de l'invention s'appliquent de manière analogue à un microscope comprenant un autre type de modulateur optique spatial de lumière qu'un miroir déformable pour moduler un faisceau lumineux en amplitude et/ou en phase. Dans le cas général d'un modulateur optique spatial, chaque élément du modulateur est commandé par des moyens de commande de manière à moduler l'amplitude et/ou la phase du faisceau lumineux. Ainsi pour un modulateur à cristaux liquides, les éléments sont les pixels qui sont commandés par des électrodes permettant d'appliquer une tension sur chaque pixel, ce qui produit une modulation locale d'amplitude et/ou de phase déterminée.

Par comparaison aux procédés de mesures de front d'onde (directe ou par interférométrie), le procédé et le dispositif proposés selon l'invention s'adaptent à tout type de source (continue ou en impulsion, quelle que soit la longueur d'onde), de modulateur optique spatial, d'objectif et de microscope et n'entraîne que peu voire pas de modification du dispositif existant. De plus, l'invention fournit une calibration du système actif optique complet (constitué par l'ensemble source+modulateur optique spatial+microscope+objectif) dans les conditions exactes dans lesquelles il est destiné à être utilisé. Enfin, l'invention procure aussi une mesure expérimentale directe de la réponse impulsionnelle excitatrice pour différentes commandes appliquées aux éléments du modulateur optique spatial.

Contrairement aux méthodes antérieures, le procédé proposé n'utilise aucune modélisation a priori du front d'onde. L'invention se base sur la mesure directe de la PSF tridimensionnelle, qui permet ainsi de reconstruire le profil de phase et d'intensité sans approximation. Ainsi, on calibre directement l'ensemble du dispositif optique actif composé du modulateur optique spatial, du microscope et de l'objectif, en fonction de l'influence d'un ensemble de commandes sur la réponse optique globale du système. Le positionnement exact du modulateur optique spatial dans le système est donc intrinsèquement pris en compte.

De plus, le temps de calcul nécessaire à la reconstruction des profils de phase est fortement réduit comparé aux procédés antérieurs. Le procédé de l'invention permet d'obtenir la calibration d'un élément actif en 20 à 50 secondes sur un système ayant 2Go de RAM.

Le procédé de l'invention et le dispositif rend désormais possible l'amélioration significative de la résolution des microscopes optiques en permettant l'intégration efficace de miroirs déformables dans des microscopes existants pour y corriger les aberrations.

L'amélioration de la qualité de la calibration peut permettre d'améliorer la résolution en 3D d'un microscope optique couplé à un modulateur optique spatial, en particulier pour :
- des échantillons biologiques inhomogènes en volume ;
- des échantillons immergés dans un milieu d'indice désadapté ; et/ou
- un microscope dont le système optique présente des aberrations optiques résiduelles.

Un microscope existant peut être modifié pour coupler un modulateur optique spatial et son système de calibration, sans nécessiter d'adaptations coûteuses. En effet, la plupart des microscopes sont couramment équipés d'un port destiné à recevoir une caméra de manière à former une image agrandie du plan focal de l'objectif.

Le procédé et le dispositif de l'invention permettent une amélioration significative - à coût et complexité modérés - des performances d'imagerie d'un microscope existant.

## Revendications

1. Procédé de calibration d'un dispositif optique à modulateur optique spatial (6), ledit dispositif comprenant un point source lumineux (1), un objectif optique (8) de grande ouverture numérique apte à recevoir un faisceau incident et/ou à collecter un faisceau optique réfléchi par un échantillon, une caméra (14) disposée dans un plan conjugué optiquement avec le plan focal de l'objectif (8) et un modulateur optique spatial (6) disposé sur le faisceau optique en amont de la caméra (14), ledit procédé comprenant les étapes suivantes :
a) mise en place d'un échantillon plan réfléchissant (10) au voisinage du plan focal de l'objectif (8),
b) application d'une commande d'amplitude Rⁱⱼ sur un élément Pᵢ du modulateur optique spatial (6), de manière à moduler le faisceau optique incident et/ou réfléchi sur l'échantillon (10),
c) acquisition d'une image de la réponse impulsionnelle excitatrice, PSF, en intensité dans un plan conjugué du plan focal de l'objectif (8),
d) modification de la distance axiale relative entre l'objectif (8) et l'échantillon (10) réfléchissant d'une quantité Z connue ;
e) itération des étapes c) et d) pour une pluralité de distances axiales relatives entre l'échantillon (10) et le plan focal de l'objectif (8) ;
f) reconstruction du profil en amplitude et/ou en phase du faisceau dans un plan conjugué du plan focal de l'objectif par un algorithme de diversité de phase pour une valeur Rⁱⱼ d'un élément Pᵢ ;
g) itération ,j , des étapes b) à f) pour une pluralité de valeurs d'amplitude Rⁱⱼ pour un élément Pᵢ du modulateur optique spatial (6) ;
h) détermination de la fonction d'influence Eᵢ d'un élément Pᵢ sur le profil en amplitude A et/ou en phase ϕ du faisceau à partir des profils obtenus à l'étape f ;
i) itération des étapes b) à h) pour les différents éléments P_{i i= 1, ...,N} du modulateur optique spatial (6) ;
j) détermination des fonctions d'influences (E₁, ... E_{N}) de l'ensemble des éléments P₁, ... P_{N} du modulateur optique spatial (6) sur le profil en amplitude A et/ou en phase ϕ du faisceau.

2. Procédé de calibration selon la revendication 1 **caractérisé en ce que** les mesures de PSF sont effectuées pour trois distances axiales relatives entre l'objectif (8) et l'échantillon (10) définies par rapport à la position de l'échantillon dans le plan focal de l'objectif telles que : z = (-z₀, 0, + z₀).

3. Procédé de calibration selon la revendication 2 **caractérisé en ce que** l'étape f) de reconstruction du profil en amplitude et/ou en phase du faisceau comprend les étapes suivantes :
- Estimation d'un terme de défocus correspondant aux trois positions relatives : -z₀, 0 et +z₀ ;
- Estimation initiale du profil du champ dans la pupille d'entrée de l'objectif ;
- Estimation du profil de transmission de la pupille d'entrée de l'objectif ;
- Calcul de trois profils de champ par multiplication du profil du champ estimé dans la pupille d'entrée de l'objectif respectivement par chacun des trois termes de défocus ;
- Application d'une transformée de Fourier pour calculer les PSF estimées pour les trois positions relatives : -z₀, 0 et +z₀ ;
- Remplacement de l'amplitude des PSF calculées par la valeur des PSF mesurées respectivement pour chacune des valeurs de z (-z₀ ; 0 ; +z₀) ;
- Application d'une transformée de Fourier inverse pour les trois champs obtenus ;
- Division par le terme de défocus correspondant respectivement à chaque position z (-z₀ ; 0 ; +z₀ ) ;
- Moyenne des trois champs complexes obtenus ;
- Multiplication de la moyenne des champs par le profil de transmission de la pupille d'entrée de l'objectif, pour obtenir une nouvelle estimation du profil du champ au niveau de la pupille arrière de l'objectif ;
- Itération de l'ensemble des étapes de l'algorithme de calcul de reconstruction du profil en amplitude et/ou en phase jusqu'à ce qu'une condition de terminaison soit remplie.

4. Procédé de calibration selon l'une des revendications 1 à 3 **caractérisé en ce qu'**il comprend une étape supplémentaire préalable à l'étape j), ladite étape supplémentaire consistant en une itération des étapes b) à i) pour différentes combinaisons de commandes simultanées d'une pluralité d'éléments.

5. Procédé de calibration selon l'une des revendications 1 à 4 **caractérisé en ce qu'**il comprend suite à l'étape c) une étape supplémentaire de filtrage numérique des images de PSF mesurées de manière à diminuer la résolution spatiale et/ou adapter la dimension des images à la taille de la pupille (9) de l'objectif (8).

6. Procédé de calibration selon l'une des revendications 1 à 5 **caractérisé en ce qu'**il comprend suite à l'étape j) une étape supplémentaire d'inversion des fonctions d'influence de l'ensemble des éléments P₁, ... P_{N} du modulateur optique spatial modulateur optique spatial (6) en amplitude A(x, y) = M_{A} (Rⁱₜ) et/ou Rⁱₜ = M_{A}⁻¹ (A(x, y)) et respectivement en phase ϕ(x, y) = M_{ϕ} (Rⁱₜ) et/ou Rⁱₜ = M_{ϕ}⁻¹ (ϕ(x, y)).

7. Système de calibration d'un dispositif optique à modulateur optique spatial (6), ledit dispositif comprenant un point source lumineux (1) générant un faisceau incident (1a), un objectif optique (8) de grande ouverture numérique apte à recevoir un faisceau incident et/ou à collecter un faisceau optique réfléchi par un échantillon, une image du point source (1) étant formée dans le plan focal de l'objectif (8), un modulateur optique spatial (6) comprenant une pluralité d'éléments (P₁, ... P_{N}) et des moyens de commande desdits éléments (P₁, ... P_{N}), le modulateur optique spatial (6) étant disposé sur le faisceau optique de manière à moduler le faisceau optique incident et/ou réfléchi, ledit système de calibration comprenant :
- un échantillon (10) plan réfléchissant disposé au voisinage du plan focal de l'objectif (8);
- un moyen d'ajustement (11) de la distance z entre le plan focal de l'objectif (8) et ledit échantillon (10) ;
- un système optique (8, 12, 13) apte à recevoir une partie du faisceau réfléchi par ledit échantillon (10) et à former une image du plan focal de l'objectif (8) dans un plan conjugué ;
- une caméra (14) disposée dans ledit plan conjugué optiquement avec le plan focal de l'objectif (8) ;
et
- un système de contrôle (15) comprenant une unité de commande du moyen d'ajustement (11) de la distance z , une unité de commande des éléments (P₁, ... Pᵢ, ... P_{N}) du modulateur optique spatiale adaptée à délivrer une pluralité de valeurs d'amplitude (6), une unité de traitement des images acquises par la caméra (14) pour une pluralité de distances z apte à en déduire une mesure de la réponse impulsionnelle excitatrice, PSF, du dispositif et des moyens de calcul aptes à déterminer les valeurs des commandes à appliquer respectivement sur le moyen d'ajustement (11) de la distance z et sur les éléments du modulateur optique spatial (6) en fonction des mesures de la PSF.

8. Système de calibration selon la revendication 7 **caractérisé en ce que** les moyens de calcul comprennent des moyens de reconstruction du profil en amplitude et/ou en phase du faisceau utilisant un algorithme de diversité de phase.

9. Système de calibration selon la revendication 8 **caractérisé en ce que** les moyens de calcul comprennent des moyens de détermination des fonctions d'influences (E₁, ... E_{N}) de l'ensemble des éléments P₁, ... P_{N} du modulateur optique spatial (6) sur le profil en amplitude A et/ou en phase ϕ du faisceau.

10. Système de calibration selon la revendication 9 **caractérisé en ce que** les moyens de calcul comprennent des moyens d'inversion des fonctions d'influence de l'ensemble des éléments P₁, ... P_{N} du modulateur optique spatial (6) par un algorithme de régression linéaire et des moyens de minimisation pour en déduire une calibration du modulateur optique spatial (6).

## Patentansprüche

1. Verfahren zum Kalibrieren einer optischen Vorrichtung mit räumlichem optischem Modulator (6), wobei die Vorrichtung eine punktförmige Lichtquelle (1), ein optisches Objektiv (8) mit grosser numerischer Apertur zum Auffangen eines einfallenden Lichtstrahls und/oder zum Auffangen eines von einer Probe reflektierten optischen Strahls, eine in einer zur Fokalebene des Objektivs optisch konjugierten Ebene angeordnete Kamera (14) und einen räumlichen optischen Modulator (6), der strahlaufwärts zur Kamera auf dem optischen Strahl angeordnet ist, aufweist, wobei das Verfahren die folgenden Schritte aufweist:
a) Einsetzen einer reflektierenden ebenen Probe (10) in der Nähe der Fokalebene des Objektivs (8),
b) Anwenden einer Amplitudensteuerung Rⁱⱼ auf ein Element Pᵢ des räumlichen optischen Modulators (6), um den einfallenden und/oder an der Probe (10) reflektierten optischen Strahl zu modulieren,
c) Auffangen eines Bildes der amplitudenanregenden Impulsantwort PSF in einer zur Fokalebene des Objektivs (8) konjugierten Ebene,
d) Modifizieren des relativen axialen Abstands zwischen dem Objektiv (8) und der mit bekannter Menge Z reflektierenden Probe (10),
e) Iteration der Schritte c) und d) für eine Vielzahl von relativen axialen Abständen zwischen der Probe (10) und der Fokalebene des Objektivs (8),
f) Nachbilden des Amplituden- und/oder Phasenprofils in einer zur Fokalebene des Objektivs konjugierten Ebene durch einen Algorithmus für verschiedene Phasen für einen Wert Rⁱⱼ eines Elements Pi,
g) Iteration j der Schritte b) bis f) für eine Vielzahl von Amplitudenwerten Rⁱⱼ für ein Element Pᵢ des räumlichen optischen Modulators (6),
h) Bestimmen der Einflussfunktion Eᵢ eines Elements Pᵢ auf ein Amplitudenprofil A und/oder Phasenprofil ϕ auf der Grundlage der im Schritt f) erhaltenen Profile,
i) Iteration der Schritte b) bis h) für die verschiedenen Elemente Pᵢ des räumlichen optischen Modulators (6) mit i = 1, ..., N,
j) Bestimmen der Einflussfunktionen (E₁, ..., E_{N}) der Gesamtheit der Elemente P₁, ..., P_{N} des räumlichen optischen Modulators (6) auf ein Amplitudenprofil A und/oder Phasenprofil ϕ des Strahls.

2. Kalibrierverfahren gemäss Anspruch 1, **dadurch gekennzeichnet, dass** die Messungen der PSF für drei relative axiale Abstände zwischen dem Objektiv (8) und der Probe (10) durchgeführt werden, die in Bezug auf eine Position der Probe in der Fokalebene des Objektivs wie etwa z = (-z₀, 0, + z₀) definiert sind.

3. Kalibrierverfahren gemäss Anspruch 2, **dadurch gekennzeichnet, dass** der Schritt f), d.h. die Nachbildung des Amplitudenprofils und/oder Phasenprofils folgende Schritte aufweist:
- Abschätzen einer den drei relativen Positionen - z₀, 0, + z₀ entsprechenden Aberration,
- Anfangsabschätzung des Profils des Felds in der Eingangsöffnung des Objektivs,
- Berechnen von drei Feldprofilen durch jeweiliges Multiplizieren des geschätzten Profils des Felds in der Eingangsöffnung des Objektivs mit jedem der drei Abberationswerte,
- Anwendung einer Fourier-Transformation, um die für die drei relativen Positionen - z₀, 0, + z₀ geschätzten PSF zu berechnen,
- Ersetzen der Amplitude der berechneten PSF durch den Wert der jeweils für jeden der Werte von z (-z₀, 0, + z₀) gemessenen PSF,
- Anwenden einer inversen Fourier-Transformation auf die drei erhaltenen Felder,
- Dividieren durch den der jeweiligen Position z (-z₀, 0, + z₀) entsprechenden Aberrationswert,
- Mitteln der erhaltenen drei komplexen Felder,
- Multiplizieren des Mittelwerts der Felder mit dem Übertragungsprofil der Eingangsöffnung des Objektivs, um eine neue Abschätzung des Felds an der hinteren Eingangsöffnung des Objektivs zu erhalten,
- Iteration der Gesamtheit der Schritte des Berechnungsalgorithmus der Nachbildung des Amplituden-und/oder Phasenprofils bis eine Endbedingung erfüllt ist.

4. Kalibrierverfahren gemäss einem der Ansprüche 1 bis 3, **dadurch gekennzeichnet, dass** es vor dem Schritt j) einen zusätzlichen Schritt aufweist, wobei der zusätzliche Schritt in einer Iteration der Schritte b) bis i) für verschiedene Kombinationen von gleichzeitigen Steuerungen einer Mehrzahl von Elementen besteht.

5. Kalibrierverfahren gemäss einem der Ansprüche 1 bis 4, **dadurch gekennzeichnet, dass** es nach dem Schritt c) einen zusätzlichen Schritt der digitalen Filterung der gemessenen PSF-Bilder aufweist, um die räumliche Auflösung zu reduzieren und/oder die Abmessungen der Bilder an die Grösse der Eingangsöffnung (9) des Objektivs (8) anzupassen.

6. Kalibrierverfahren gemäss einem der Ansprüche 1 bis 5, **dadurch gekennzeichnet, dass** es nach dem Schritt j) einen zusätzlichen Schritt der Umkehrung der Einflussfunktionen der Gesamtheit der Elemente P₁, ..., P_{N} des räumlichen optischen Modulators (6) hinsichtlich der Amplitude A(x, y) = M_{A} (Rⁱₜ) und/oder Rⁱₜ = M_{A}⁻¹ (A(x, y)) und der Phase ϕ(x, y) = M_{ϕ} (Rⁱₜ) und/oder Rⁱₜ = M_{ϕ}⁻¹ (ϕ(x, y)).

7. System zum Kalibrieren einer optischen Vorrichtung mit räumlichem optischem Modulator (6), wobei die Vorrichtung eine punktförmige, einen einfallenden Strahl (1a) erzeugende Lichtquelle (1), ein optisches Objektiv (8) mit grosser numerischer Apertur zum Auffangen eines einfallenden Lichtstrahls und/oder zum Auffangen eines von einer Probe reflektierten optischen Strahls, wobei ein Bild der punktförmigen Lichtquelle (1) in der Fokalebene des Objektivs (8) gebildet ist, einen räumlichen optischen Modulator (6) mit einer Mehrzahl von Elementen (P₁, ..., P_{N}) und Mittel zur Steuerung der Elemente (P₁, ..., P_{N}) aufweist, wobei der räumliche optische Modulator (6) auf dem optischen Strahl angeordnet ist, um den einfallenden und/oder reflektierten optischen Strahl zu modulieren, wobei das Kalibriersystem folgendes aufweist:
- eine in der Nähe der Fokalebene des Objektivs (8) angeordnete ebene reflektierende Probe (10),
- ein Mittel (11) zum Einstellen der Entfernung z zwischen der Fokalebene des Objektivs (8) und der Probe (10),
- ein optisches System (8, 12, 13), dazu ausgelegt, einen Teil des von der Probe (10) reflektierten Strahls zu empfangen und ein Bild der Fokalebene des Objektivs (8) in einer konjugierten Ebene zu erzeugen,
- eine in der zur Fokalebene des Objektivs (8) optisch konjugierten Ebene angeordnete Kamera (14), und
- ein Steuersystem (15) mit einer Einheit zur Steuerung der Mittel (11) zum Einstellen der Entfernung z, einer zur Abgabe einer Mehrzahl von Amplitudenwerten ausgelegten Einheit zur Steuerung der Elemente (P₁, ..., Pᵢ, ..., P_{N}) des räumlichen optischen Modulators (6), einer Einheit zur Verarbeitung der von der Kamera (14) aufgenommenen Bilder für eine Mehrzahl von Entfernungen z, die dazu ausgelegt ist, daraus ein Mass für die anregende Impulsantwort PSF abzuleiten, und Rechenmitteln, die dazu ausgelegt sind, die jeweils an die Mittel (11) zum Einstellen der Entfernung z und an die Elemente des räumlichen optischen Modulators (6) anzulegenden Steuerwerte in Abhängigkeit von den Messungen der PSF zu bestimmen.

8. Kalibriersystem gemäss Anspruch 7, **dadurch gekennzeichnet, dass** die Rechenmittel Mittel zum Nachbilden des Profils hinsichtlich der Amplitude und der Phase des Strahls unter Verwendung eines Algorithmus für eine Vielfalt von Phasen aufweisen.

9. Kalibriersystem gemäss Anspruch 8, **dadurch gekennzeichnet, dass** die Rechenmittel Mittel zum Bestimmen der Einflussfunktionen (E₁, ..., E_{N}) der Gesamtheit der Elemente P₁, ..., P_{N} des räumlichen optischen Modulators (6) auf das Amplitudenprofil A und/oder Phasenprofil ϕ des Strahls aufweisen.

10. Kalibriersystem gemäss Anspruch 9, **dadurch gekennzeichnet, dass** die Rechenmittel Mittel zur Umkehr der Einflussfunktionen der Gesamtheit der Elemente P₁, ..., P_{N} des räumlichen optischen Modulators (6) durch einen linearen regressiven Algorithmus und Minimiermittel, die dazu ausgelegt sind, daraus eine Kalibrierung des räumlichen optischen Modulators (6) abzuleiten, aufweisen.

## Claims

1. A method for the calibration of an optical device having a spatial optical modulator (6), said device comprising a light source point (1), an optical objective (8) of large numerical aperture adapted to receive an incident beam and/or to collect an optical beam reflected by a sample, a camera (14) placed in a plane that is optically conjugate to the focal plane of the objective (8) and a spatial optical modulator placed on the optical beam upstream of the camera (14), said method comprises the following steps:
a) placement of a reflective planar sample (10) in the vicinity of the focal plane of the objective (8);
b) application of a command of amplitude Rⁱⱼ on an element Pᵢ of the spatial optical modulator (6), in such a manner to modulate the optical beam incident and/or reflected on the sample (10);
c) acquisition of an image of the intensity of the Point Spread Function, PSF, in a plane conjugate to the focal plane of the objective (8);
d) modification of the relative axial distance between the objective (8) and the reflecting sample (10) by a known quantity Z;
e) iteration, j, of the steps c) and d) for a plurality of relative axial distances between the sample (10) and the focal plane of the objective (8);
f) reconstruction of the amplitude and/or phase profile of the beam in a plane conjugate to the focal plane of the objective by a phase diversity algorithm for a value Rⁱⱼ of an element Pᵢ;
g) iteration of the steps b) to f) for a plurality of amplitude values Rⁱⱼ for an element Pᵢ of the spatial optical modulator (6);
h) determination of the influence function Eᵢ of an element Pᵢ on the amplitude profile A and/or phase profile ϕ of the beam from the profiles obtained at step f) ;
i) iteration of the steps b) to h) for the different elements P_{i i=1},..,_{N} of the spatial optical modulator (6);
j) determination of the influence functions (E₁, ... E_{N}) of all the elements P₁, ... P_{N} of the spatial optical modulator (6) on the amplitude profile A and/or phase profile ϕ of the beam.

2. The method of calibration according to claim 1, **characterized in that** the PSF measurements are performed for three relative axial distances between the objective (8) and the sample (10), defined with respect to the position of the sample in the focal plane of the objective, in such a way that: z = (-z₀, 0, +z₀).

3. The method of calibration according to claim 2, **characterized in that** the step f) of reconstruction of the amplitude and/or phase profile of the beam comprises the following steps:
- estimation of a defocus term corresponding to the three relative positions -z₀, 0 and +z₀;
- initial estimation of the field profile in the entrance pupil of the objective;
- estimation of the transmission profile of the entrance pupil of the objective;
- calculation of three field profiles by multiplying the field profile estimated in the entrance pupil of the objective by each of the three defocus terms, respectively;
- application of a Fourier transform to calculate the estimated PSFs for the three relative positions -z₀, 0 and +z₀;
- replacement of the amplitude of the calculated PSFs by the value of the PSFs respectively measured for each of the values of z (-z₀, 0, +z₀);
- application of a reverse Fourier transform for the three fields obtained;
- division by the defocus term corresponding to each position z (-z₀, 0, +z₀) respectively;
- averaging of the three complex fields obtained;
- multiplication of the field average by the transmission profile of the entrance pupil of the objective, to obtain a new estimation of the field profile at the rear pupil of the objective;
- iteration of all the steps of the algorithm of calculation of the amplitude and/or phase profile reconstruction until one ending condition is fulfilled.

4. The method of calibration according to one of the claims 1 to 3, **characterized in that** it comprises an additional step, previous to step j), said additional step consisting in iterating the steps b) to i) for different combinations of simultaneous commands for a plurality of elements.

5. The method of calibration according to one of the claims 1 to 4, **characterized in that** it comprises, following step c), an additional step of digital filtering of the measured PSF images so as to reduce the spatial resolution and/or to adapt the size of the images to the size of the pupil (9) of the objective (8).

6. The method of calibration according to one of the claims 1 to 5, **characterized in that** it comprises, following step j), an additional step of inversion of the influence functions of all the elements P₁, ... P_{N} of the spatial optical modulator (6) by a linear regression algorithm to extract therefrom a calibration of the spatial optical modulator (6) in terms of amplitude A(x,y) = M_{A}(Rⁱₜ) and/or Rⁱₜ = M_{A}⁻¹ (A(x,y)) and in terms of phase ϕ(x,y) = Mϕ (Rⁱₜ) and/or Rⁱₜ = Mϕ⁻¹ (ϕ(x,y)), respectively.

7. A system for the calibration of an optical device having a spatial optical modulator (6), said device comprising a point light source (1) generating an incident beam (1a), an optical objective (8) of large numerical aperture adapted to receive an incident beam and/or to collect an optical beam reflected by a sample, an image of the point source (1) being formed in the focal plane of the objective (8), a spatial optical modulator (6) comprising a plurality of elements (P₁, ... P_{N}) and means for controlling said elements (P₁, ... P_{N}), the spatial optical modulator (6) being placed on the optical beam so as to modulate the incident and/or reflected optical beam, said system of calibration comprising:
- a reflective planar sample (10) placed in the vicinity of the focal plane of the objective (8);
- a means of adjustment (11) of the distance z between the focal plane of the objective (8) and said sample (10);
- an optical system (8, 12, 13) adapted to receive a part of the beam reflected by said sample (10) and to form an image of the focal plane of the objective (8) in a conjugate plane;
- a camera (14) placed in said plane optically conjugate to the focal plane of the objective (8); and
- a control system (15) comprising a unit for controlling the means of adjustment (11) of the distance z, a unit for controlling the elements (P₁, ...P_{i,} ...P_{N}) of the spatial optical modulator (6) adapted for delivering a plurality of amplitude values, a unit for processing the images acquired by the camera (14) for a plurality of distances z adapted to deduce therefrom a measurement of the Point Spread Function, PSF, of the device, and calculation means adapted to determine the values of the commands to be applied to the means of adjustment (11) of the distance z and to the elements of the spatial optical modulator (6), respectively, as a function of the PSF measurements.

8. A system of calibration according to claim 7, **characterized in that** the calculation means comprise means for reconstructing the amplitude and/or phase profile of the beam using a phase diversity algorithm.

9. A system of calibration according to claim 8, **characterized in that** the calculation means comprise means for determining the influence functions (E₁, ... E_{N}) of all the elements P₁, ... P_{N} of the spatial optical modulator (6) on the amplitude profile A and/or phase profile ϕ of the beam.

10. A system of calibration according to claim 9, **characterized in that** the calculation means comprise means for inversing the influence functions of all the elements P₁, ... P_{N} of the spatial optical modulator (6) by a linear regression algorithm and minimization means for deducing therefrom a calibration of the spatial optical modulator (6).
